# EUROPEAN PATENT APPLICATION

(11) **EP 4 779 401 A1**
(43) Date of publication of application: **22.07.2026**
(21) Application number: 25171309.5
(22) Date of filing: 17.04.2025
(51) Int. Cl.: G03B 21/14, G03B 21/16, G03B 21/30, H04N 9/31

(54) **FOLDABLE PROJECTOR**

(30) Priority: 17.01.2025 CN 202510078399
(71) Applicant: Shenzhen Neutop Optoelectronics Co., Ltd, Shenzhen 518000 (CN)
(72) Inventor: WANG, Yong, Shenzhen, 518000 (CN); WANG, Ming, Shenzhen, 518000 (CN)
(74) Representative: J A Kemp LLP

(57) **Abstract**

Provided is a foldable projector. The foldable projector includes a projection module (1) and an auxiliary module (2). The projection module (1) and the auxiliary module (2) form a foldable structure that can be unfolded when used or folded when stored. With this arrangement, after the foldable projector is folded, the projection module (1) and the auxiliary module (2) can be attached and connected to each other to form a compact structure so that the foldable projector occupies a smaller volume, making it easier for a user to store and carry the foldable projector. Moreover, when the foldable projector is unfolded when used, the projection module (1) can rotate away from the auxiliary module (2) so that the auxiliary module (2) can avoid a heat dissipation route of the projection module (1), providing a sufficient space for the projection module (1) to dissipate heat.

## Description

### TECHNICAL FIELD

This disclosure relates to the technical field of projection devices, particularly a foldable projector.

### BACKGROUND

A projector is a device that can project video, images, or text onto a screen for display. Projectors are now widely used in places such as homes, meeting rooms, schools, and cinemas. However, traditional projectors are large and heavy, making them inconvenient for movement and portability. With the advancement of technology, there is an increasing demand for projectors to be more compact and portable. Since an existing projector has a complex structure that requires a large number of components, reducing the size while improving the usability has become a key challenge to be addressed.

In view of this problem, existing technologies have provided various projectors that have a smaller size for easier portability. For example, the related art with application number 201721019860.5 provides a foldable device and a projection device using the foldable device. In the device, a base and a housing provided with a projector are both connected to a foldable mechanism so that when the foldable mechanism deforms, the device occupies a smaller volume and is more portable. However, a common problem with this projector and existing improved projectors is poor heat dissipation and high temperature in the projector used for a long time, reducing the stability and the service life of the projector.

### SUMMARY

The disclosure provides a foldable projector that is convenient to carry, store, and use, has an optimized heat dissipation performance, and thus has a better use stability and a longer service life.

A foldable projector includes a projection module and an auxiliary module that are conductively connected. The projection module is pivotably coupled to the auxiliary module so that the projection module and the auxiliary module form a foldable structure.

Optionally, the auxiliary module includes a power supply module, a speaker module, and a first foldable member. The speaker module and the power supply module are integrally mounted on the first foldable member and electrically connected to the projection module. The first foldable member is pivotably coupled to the projection module.

Optionally, the auxiliary module includes a power supply module, a speaker module, a first foldable member, and a second foldable member. The speaker module and the power supply module are conductively connected to the projection module. Two ends of the second foldable member are pivotably connected to the projection module and the first foldable member respectively. The power supply module is mounted on the first foldable member. The speaker module is mounted on the second foldable member.

Optionally, the first foldable member includes a first foldable housing and a first pivot connection mechanism. The power supply module is disposed in the first foldable housing. The first foldable housing is rotatably connected to the second foldable member through the first pivot connection mechanism.

Optionally, the first pivot connection mechanism includes a first rotary shaft cover and a first rotary shaft. The first rotary shaft cover is connected to the projection module and is rotatably connected to the second foldable member through the first rotary shaft.

Optionally, the second foldable member includes a second foldable housing and a second pivot connection mechanism. The speaker module is disposed in the second foldable housing. The second foldable housing is rotatably connected to the projection module through the second pivot connection mechanism.

Optionally, the second pivot connection mechanism includes a second rotary shaft cover and a second rotary shaft. The second rotary shaft cover is connected to the second foldable member and is rotatably connected to the first foldable member through the second rotary shaft.

Optionally, the projection module is provided with a first wire hole, the second rotary shaft cover is provided with a second wire hole, and the second foldable member is provided with a third wire hole. A transmission wire harness in the second foldable member passes through the third wire hole, the second wire hole, and the first wire hole and is connected to a main board in the projection module.

Optionally, the second foldable housing is provided with a fourth wire hole, the first rotary shaft cover is provided with a fifth wire hole, and the first foldable housing is provided with a sixth wire hole. A conductive wire harness in the first foldable member passes through the sixth wire hole, the fifth wire hole, the fourth wire hole, the third wire hole, the second wire hole, and the first wire hole and is conductively connected to the main board in the projection module.

Optionally, the power supply module is a battery pack.

In this disclosure, after the foldable projector is folded, the projection module and the auxiliary module can be attached and connected to each other to form a compact structure so that the foldable projector occupies a smaller volume, making it easier for a user to store and carry the foldable projector. Moreover, when the foldable projector is unfolded when used, the projection module can rotate away from the auxiliary module so that the auxiliary module can avoid a heat dissipation route of the projection module, providing a sufficient space for the projection module to dissipate heat, thereby reducing the heat dissipation costs and improving the use stability and the service life of the foldable projector.

### BRIEF DESCRIPTION OF DRAWINGS

FIG. 1 is a view of a foldable projector unfolded according to embodiment one of this disclosure.
FIG. 2 is a view of a foldable projector folded according to embodiment one of this disclosure.
FIG. 3 is a top view of a first rotary shaft cover according to embodiment one of this disclosure.
FIG. 4 is a section view taken along A-A of FIG. 3.
FIG. 5 is a view of a second foldable housing taken from a first perspective according to embodiment one of this disclosure.
FIG. 6 is a view of a projection module according to embodiment one of this disclosure.
FIG. 7 is a top view of a second rotary shaft cover according to embodiment one of this disclosure.
FIG. 8 is a section view taken along B-B of FIG. 7.
FIG. 9 is a view of a second foldable housing taken from a second perspective according to embodiment one of this disclosure.
FIG. 10 is a view of a first foldable housing according to embodiment one of this disclosure.
FIG. 11 is a view of a foldable projector folded according to embodiment two of this disclosure.

### Reference list

1. projection module, 11. first wire hole, 2. auxiliary module;
21. first foldable member, 22. second foldable member;
211. first foldable housing, 2111. sixth wire hole, 212. first pivot connection mechanism, 2121. first rotary shaft cover, 21211. first connection hole, 21212. fifth wire hole;
221. second foldable housing, 2211. first mounting groove, 2212. second connection hole, 2213. second mounting groove, 2214. fourth connection hole, 2215. third wire hole, 2216. fourth wire hole, 222. second pivot connection mechanism, 2221. second rotary shaft cover, 22211. third connection hole, 22212. second wire hole, 222. third wire hole, 223. second mounting groove, 2231. fourth connection hole.

### DETAILED DESCRIPTION

This disclosure is described below in detail in conjunction with the drawings and embodiments. It is to be understood that the embodiments described herein are intended to explain this disclosure and not to limit this disclosure. Additionally, it is to be noted that for ease of description, only part, not all, of the structures related to this disclosure are illustrated in the drawings.

In the description of this disclosure, terms "joined", "connected", and "secured" are to be understood in a broad sense unless otherwise expressly specified and limited. For example, the term "connected" may refer to "securely connected", "detachably connected", or "integrated", may refer to "mechanically connected" or "electrically connected", may refer to "connected directly" or "connected indirectly through an intermediary", or may refer to "connected inside two elements" or "an interaction relation between two elements". For those of ordinary skill in the art, specific meanings of the preceding terms in this disclosure may be understood based on specific situations.

In this disclosure, unless otherwise expressly specified and limited, when a first feature is described as "above" or "below" a second feature, the first feature and the second feature may be in direct contact, or the first feature and the second feature may be in contact via another feature between the two features instead of being in direct contact. Moreover, when the first feature is described as "on", "above", or "over" the second feature, the first feature is right on, above, or over the second feature, the first feature is obliquely on, above, or over the second feature, or the first feature is simply at a higher level than the second feature. When the first feature is described as "under", "below", or "underneath" the second feature, the first feature is right under, below, or underneath the second feature, the first feature is obliquely under, below, or underneath the second feature, or the first feature is simply at a lower level than the second feature.

In the description of this embodiment, the orientation or position relationships indicated by terms "above", "below", "right", "left" and the like are based on the orientation or position relationships shown in the drawings, merely for ease of description and simplifying an operation, and these relationships do not indicate or imply that the referred device or element has a specific orientation and is constructed and operated in a specific orientation, and thus it is not to be construed as limiting this disclosure. Additionally, terms "first" and "second" are used for distinguishing between descriptions and have no special meanings.

Solutions of this disclosure are described hereinafter in conjunction with drawings and two embodiments.

### Embodiment one

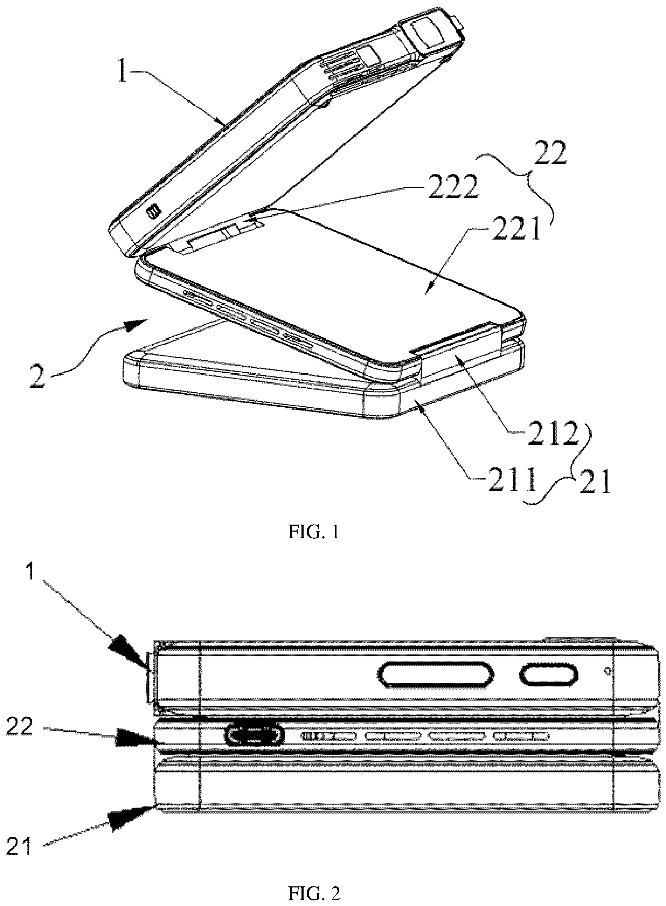

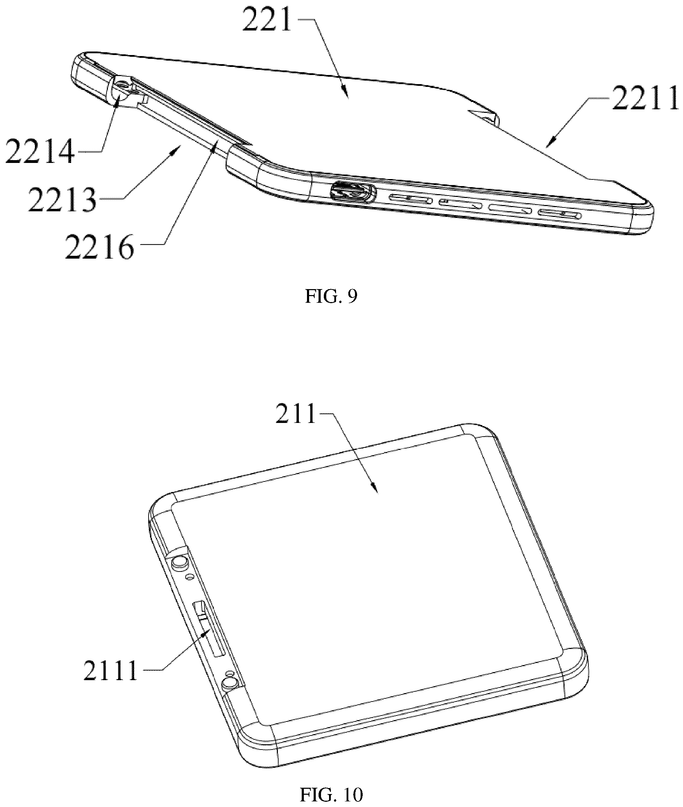

As shown in FIG. 1 to FIG. 10, an embodiment of this disclosure provides a foldable projector. The foldable projector includes a projection module 1 and an auxiliary module 2 that are conductively connected. The projection module 1 is pivotably coupled to the auxiliary module 2 so that the projection module 1 and the auxiliary module 2 form a foldable structure. When the foldable projector is in the folded state, the projection module 1 and the auxiliary module 2 can be attached and connected to form a compact structure. The formed compact structure occupies a smaller volume, making it easier for a user to store and carry the foldable projector.

In this embodiment, the projection module 1 includes a driving board, a control main board, a display panel, a light source, a lens, and a heat sink. The driving board, the display panel, the light source, and the heat sink are all connected to the control main board. The driving board can distribute the transmitted power to the display panel, the light source, and the heat sink through the control main board. The control main board can control the display panel to generate an image and control the light source to turn on so that the light source generates sufficiently strong light to illuminate the image and project the image onto a screen. Meanwhile, the control main board can control the heat sink to turn on to dissipate heat from a heating position (mainly the light source), thereby avoiding overheating of the heating position that affects the working performance of the foldable projector.

It is to be noted that the heat sink may be a heat dissipation structure such as a heat dissipation fan or a heat dissipation fin as long as the heat sink has a small structure and satisfies the heat dissipation requirements. This is not limited in this embodiment.

Referring to FIG. 1 and FIG. 2, the auxiliary module 2 includes a power supply module, a speaker module, a first foldable member 21, and a second foldable member 22. In this embodiment, the power supply module is optionally a battery pack. The energy density of the battery pack is high so that the volume and weight of the power supply module can be correspondingly reduced to satisfy the use requirements of the foldable projector to be lightweight and portable. Moreover, the battery pack can provide a longer usage time so that the usage durability of the foldable projector is longer, thereby bringing a better user experience. In addition, since the power supply module is convenient and fast to charge, the foldable projector can quickly recover its working capability after the power is exhausted, thereby better improving the user experience.

In an embodiment, the power supply module is conductively connected to the driving board in the projection module 1, and the speaker module is conductively connected to a main board in the projection module 1. Thus, the main board can control the opening and closing of the speaker module. Two ends of the second foldable member 22 are pivotably coupled to the projection module 1 and the first foldable member 21 respectively. The power supply module is mounted on the first foldable member 21. The speaker module is mounted on the second foldable member 22.

With this arrangement, the projection module 1, the power supply module, and the speaker module can be divided into three independent parts so that the foldable projector forms a three-fold projector. In this manner, after the foldable projector is unfolded, the projection module 1, the power supply module, and the speaker module can be separated from each other instead of gathering in the same housing space, thereby reducing the interference and influence between each other during operation. In addition, after the foldable projector is unfolded, the projection module 1 can rotate away from the power supply module and the speaker module so that the power supply module and the speaker module can avoid a heat dissipation route of the projection module 1 so that the projection module 1 has a sufficient space for heat dissipation, thereby reducing the heat dissipation costs and improving the use stability and the service life of the foldable projector.

Optionally, the first foldable member 21 of this embodiment includes a first foldable housing 211 and a first pivot connection mechanism 212. The first foldable housing 211 has a cavity for accommodating the power supply module to protect the power supply module. The first foldable housing 211 can be rotatably connected to the second foldable member 22 through the first pivot connection mechanism 212 so that the first foldable member 21 can rotate towards or away from the second foldable member 22. With this arrangement, when the first foldable member 21 is placed on and supported by the horizontal ground and the second foldable member 22 rotates relative to the first foldable member 21, the second foldable member 22 can drive the projection module 1 to ascend or descend in the vertical direction so that the projection module 1 can be adjusted to an optimal height suitable for use.

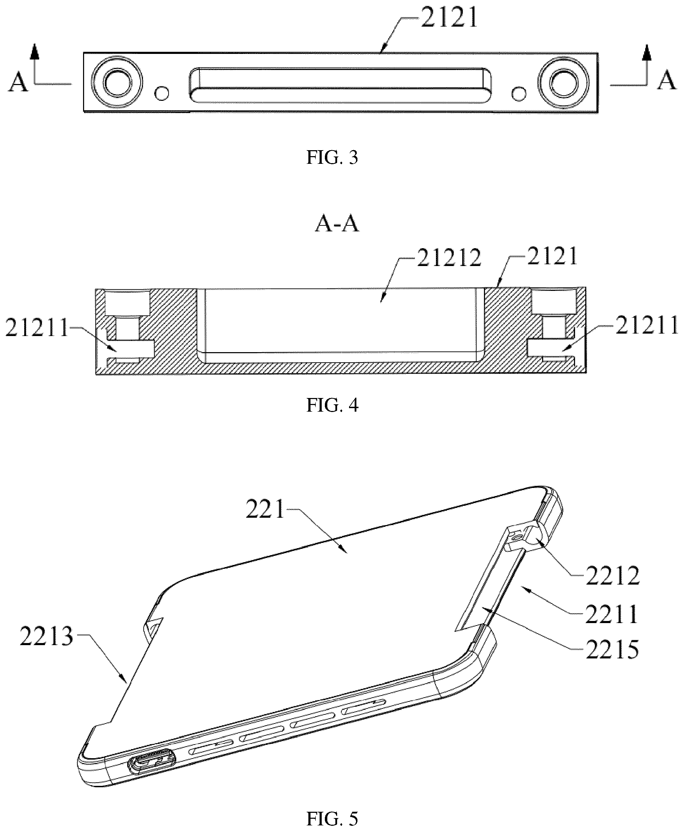

Optionally, with reference to FIG. 3 to FIG. 5, the first pivot connection mechanism 212 includes a first rotary shaft cover 2121 and a first rotary shaft. In an embodiment, the first rotary shaft cover 2121 is an elongated block structure. One end of the first rotary shaft cover 2121 can be secured to the second foldable member 22 by a locking member. Two sides of the first rotary shaft cover 2121 are provided with first connection holes 21211 inward along the length direction of the first rotary shaft cover 2121. One end of the second foldable member 22 is provided with a first mounting groove 221. Two side walls of the first mounting groove 2211 are each provided with one second connection hole 2212. The first rotary shaft cover 2121 is inserted in the first mounting groove 2211. The second connection holes 2212 are arranged in the first connection holes 21211 one to one. In addition, two first rotary shafts are provided. Each second connection hole 2212 is rotatably connected to the first connection hole 21211 through the first rotary shaft.

This arrangement effectively simplifies the structure of the first pivot connection mechanism 212, reduces the assembly difficulty, and ensures that the first foldable member 21 is stably rotatably connected to the second foldable member 22. In addition, the arrangement of the first rotary shaft cover 2121 can optimize the spatial layout of the first foldable member 21 and the second foldable member 22 so that the first foldable member 21 and the second foldable member 22 can be more attached to each other and be more compact after being folded, thereby preventing the end of the second foldable member 22 from interfering with the folding of the first foldable member 21 and from incomplete accommodation.

Optionally, the second foldable member 22 of this embodiment includes a second foldable housing 221 and a second pivot connection mechanism 222. The second foldable housing 221 has a cavity for accommodating the speaker module to protect the speaker module. One end of the second foldable housing 221 is provided with the first mounting groove 2211 so that the second foldable housing 221 can be rotatably connected to the first foldable housing 211 through the first pivot connection mechanism 212 and the other end of the second foldable housing 221 can be rotatably connected to the projection module 1 through the second pivot connection mechanism 222 so that the projection module 1 can rotate relative to the second foldable member 22.

With this arrangement, when the first foldable member 21 is placed on and supported by the horizontal ground and the second foldable member 22 rotates to a certain angle relative to the first foldable member 21, the projection module 1 can continue rotating relative to the second foldable member 22 so that the projection module 1 can be extended to a higher projection height. Moreover, since the second foldable member 22 can rotate by a certain angle relative to the first foldable member 21, the projection module 1 can rotate by a certain angle relative to the second foldable member 22, thereby better increasing the projection angle of the projection module 1 and enabling projection within a range of 360°.

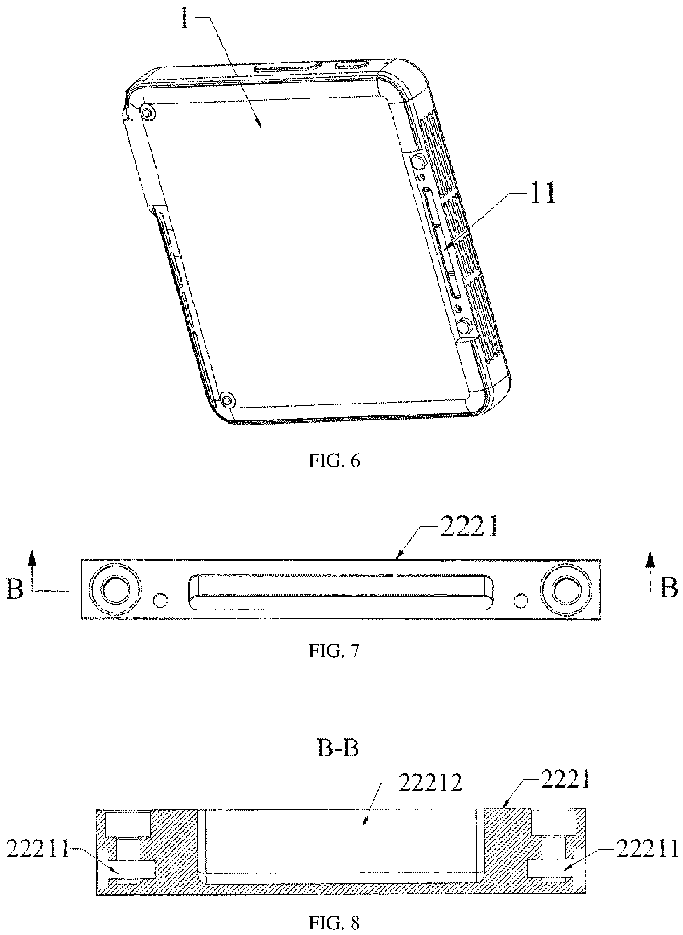

Optionally, as shown in FIG. 7 to FIG. 9, the second pivot connection mechanism 222 includes a second rotary shaft cover 2221 and a second rotary shaft. In an embodiment, the second rotary shaft cover 2221 and the first rotary shaft cover 2121 have the same structure, facilitating mass production and reducing the costs. One end of the second rotary shaft cover 2221 can be secured to the projection module 1 by a locking member. Two sides of the second rotary shaft cover 2221 are provided with third connection holes 22211 inward in the length direction of the second rotary shaft cover 2221. The other end of the second foldable housing 221 is provided with a second mounting groove 2213. Two side walls of the second mounting groove 2213 are each provided with one fourth connection hole 2214. The second rotary shaft cover 2221 is inserted in the second mounting groove 2213. The third connection holes 22211 are disposed in the fourth connection holes 2214 one to one. In addition, two second rotary shafts are provided. Each fourth connection hole 2214 is rotatably connected to the third connection hole 22211 by the second rotary shaft.

With this arrangement, the second pivot connection mechanism 222 has a simpler structure, ensuring the stable rotational connection and complete attachment between the projection module 1 and the second foldable member 22 and making it easier to store and carry the foldable projector.

Further, in this embodiment, the housing of the projection module 1, the first foldable member 21, and the second foldable member 22 are all flat square housing structures so that after the three are folded, the overall structure is more compact, better reducing the volume occupation rate of the foldable projector in space. Thus, the foldable projector is more applicable to an application scenario with limited space, is more convenient to carry and move, and has wider applicability. In addition, the flat design also effectively increases the heat dissipation area of the projection module 1 to achieve a better heat dissipation effect with the help of the heat sink.

In this embodiment, referring to FIG. 5, FIG. 6, and FIG. 8, the projection module 1 is provided with a first wire hole 11, the second rotary shaft cover 2221 is provided with a second wire hole 22212, and the second foldable housing 221 is provided with a third wire hole 2215. A transmission wire harness on the speaker module in the second foldable member 22 is connected to the main board in the projection module 1 after passing through the third wire hole 2215, the second wire hole 22212, and the first wire hole 11 in sequence. This layout can make the transmission wire harness on the speaker module more convenient to manage and avoid complex wiring operations. In addition, regardless of whether the foldable projector is in an extended state or a compressed state, the first rotary shaft cover 2121 can protect the transmission wire harness, preventing the transmission wire harness from being exposed to an external environment and preventing damage to the transmission wire harness caused by external factors.

Optionally, in this embodiment, referring to FIG. 4, FIG. 9, and FIG. 10, the second foldable housing 221 is provided with a fourth wire hole 2216, the first rotary shaft cover 2121 is provided with a fifth wire hole 21212, and the first foldable housing 211 is provided with a sixth wire hole 2111. A conductive wire harness on a battery pack in the first foldable housing 211 is connected to the main board in the projection module 1 after passing through the sixth wire hole 2111, the fifth wire hole 21212, the fourth wire hole 2216, the third wire hole 2215, the second wire hole 22212, and the first wire hole 11 in sequence so that the power supply module can supply power to the projection module 1 and the speaker module. With this arrangement, the layout of the conductive wire harness on the battery pack is more reasonable and safe. The conductive wire harness is constrained and protected by the six wire holes, ensuring that the conductive wire harness does not loosen or fall off easily and avoiding the risk that the conductive wire harness is scratched and worn by the external environment.

### Embodiment two

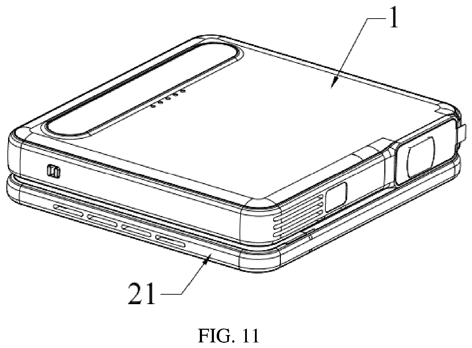

Referring to FIG. 11, this embodiment provides a foldable projector. Different from embodiment one, in this embodiment, the foldable projector includes only a first foldable member 21. The first foldable member 21 is directly rotatably connected to the projection module 1. The speaker module and the power supply module are both integrally mounted on the first foldable member 21 so that the projection module 1, the power supply module, and the speaker module are divided into two independent parts, thereby forming a double-foldable projector. With this arrangement, after the foldable projector is unfolded, the projection module 1 can also be separated from the power supply module, improving the heat dissipation performance of the projection module 1 and better reducing the occupied space of the foldable projector when unfolded or folded. Thus, the foldable projector is more convenient to use and carry and has a wider application range.

Therefore, those skilled in the art can select whether the speaker module and the power supply module are integrated together in the first foldable member 21 or disposed in the first foldable member 21 and the second foldable member 22 separately according to actual working condition requirements. This is not limited in this disclosure.

It is to be additionally noted that a projector including other types of modules in addition to the projection module 1, the speaker module, and the power supply module can also use the arrangement of embodiment one: arranging different modules on different foldable members independently and designing the foldable projector as a projector with more foldable layers. With this arrangement, when the foldable projector is unfolded for use, the modules can be separated form rather than integrated with the projection module 1, thereby improving the heat dissipation performance and efficiency of the projection module 1. Moreover, after the foldable projector is folded, the modules can be attached together, thereby satisfying the requirements of convenient storage and carrying.

In the description of the specification, the description of reference terms "an embodiment", "some embodiments" and the like means that a specific feature, structure, material, or characteristic described in connection with the embodiment or the example is included in at least one embodiment or example of this disclosure. In the Specification, the illustrative description of the preceding terms does not necessarily refer to the same embodiments or examples. Moreover, the described specific features, structures, materials, or characteristics may be combined appropriately in any one or more embodiments or examples.

## Claims

1. A foldable projector, comprising a projection module (1) and an auxiliary module (2) that are conductively connected, wherein the projection module (1) is pivotably coupled to the auxiliary module (2) so that the projection module (1) and the auxiliary module (2) form a foldable structure.

2. The foldable projector of claim 1, wherein the auxiliary module (2) comprises a power supply module, a speaker module, and a first foldable member (21), wherein the speaker module and the power supply module are integrally mounted on the first foldable member (21) and electrically connected to the projection module (1), and the first foldable member (21) is pivotably coupled to the projection module (1).

3. The foldable projector of claim 1, wherein the auxiliary module (2) comprises a power supply module, a speaker module, a first foldable member (21), and a second foldable member (22), wherein the speaker module and the power supply module are conductively connected to the projection module (1), two ends of the second foldable member (22) are pivotably connected to the projection module (1) and the first foldable member (21) respectively, the power supply module is mounted on the first foldable member (21), and the speaker module is mounted on the second foldable member (22).

4. The foldable projector of claim 3, wherein the first foldable member (21) comprises a first foldable housing (211) and a first pivot connection mechanism (212), wherein the power supply module is disposed in the first foldable housing (211), and the first foldable housing (211) is rotatably connected to the second foldable member (22) through the first pivot connection mechanism (212).

5. The foldable projector of claim 4, wherein the first pivot connection mechanism (212) comprises a first rotary shaft cover (2121) and a first rotary shaft, wherein the first rotary shaft cover (2121) is connected to the projection module (1) and is rotatably connected to the second foldable member (22) through the first rotary shaft.

6. The foldable projector of claim 5, wherein the second foldable member (22) comprises a second foldable housing (221) and a second pivot connection mechanism (222), wherein the speaker module is disposed in the second foldable housing (221), and the second foldable housing (221) is rotatably connected to the projection module (1) through the second pivot connection mechanism (222).

7. The foldable projector of claim 6, wherein the second pivot connection mechanism (222) comprises a second rotary shaft cover (2221) and a second rotary shaft, wherein the second rotary shaft cover (2221) is connected to the second foldable member (22) and is rotatably connected to the first foldable member (21) through the second rotary shaft.

8. The foldable projector of claim 7, wherein the projection module (1) is provided with a first wire hole (11), the second rotary shaft cover (2221) is provided with a second wire hole (22212), the second foldable member (22) is provided with a third wire hole (2215), and a transmission wire harness in the second foldable member (22) passes through the third wire hole (2215), the second wire hole (22212), and the first wire hole (11) and is connected to a main board in the projection module (1).

9. The foldable projector of claim 8, wherein the second foldable housing (221) is provided with a fourth wire hole (2216), the first rotary shaft cover (2121) is provided with a fifth wire hole (21212), the first foldable housing is provided with a sixth wire hole (2111), and a conductive wire harness in the first foldable member (21) passes through the sixth wire hole (2111), the fifth wire hole (21212), the fourth wire hole (2216), the third wire hole (2215), the second wire hole (22212), and the first wire hole (11) and is conductively connected to the main board in the projection module (1).

10. The foldable projector of claim 2 or 3, wherein the power supply module is a battery pack.
